# EUROPÄISCHE PATENTSCHRIFT

(11) **EP 0 582 934 B1**
(45) Veröffentlichungstag und Bekanntmachung des Hinweises auf die Patenterteilung: **15.05.1996**
(21) Anmeldenummer: 93112395.4
(22) Anmeldetag: 03.08.1993
(51) Int. Cl.: B60T 11/04

(54) **Einstellvorrichtung für Bremsen, insbesondere von Kraftfahrzeugbremsen**
Adjusting device for brakes, particularly for vehicle brakes
Dispositif de mise au point pour freins, notamment pour freins de véhicules

(30) Priorität: 12.08.1992 DE 4226568; 09.12.1992 DE 4241389
(43) Veröffentlichungstag der Anmeldung: 16.02.1994
(73) Patentinhaber: KÜSTER & Co. GmbH, D-35630 Ehringshausen (DE)
(72) Erfinder: Hilgert, Günter, D-35584 Wetzlar (DE); Moritz, Reiner, D-35630 Ehringhausen (DE); Perner, Armin, D-35614 Asslar (DE)
(74) Vertreter: Müller, Eckhard, Dr.

(56) Entgegenhaltungen:
- EP-A- 0 478 725
- DE-A- 3 819 177
- FR-A- 2 617 920

## Beschreibung

Die Erfindung betrifft eine Einstellvorrichtung für Bremsen, insbesondere für Hand- oder Feststellbremsen von Kraftfahrzeugen mit einem Bremshebel, einem Betätigungselement für die Bremse, einer Baueinheit zur Verstellung der wirksamen Länge des Bremszuges mit zwei Freilaufeinrichtungen, wobei mindestens eine Freilaufeinrichtung mittels einer formschlüssigen Verbindung die relative Position von Bremshebel und Betätigungselemen unter der Bremsspannung verriegelt sowie mit mindestens drei Anschlägen zur Einstellung des Weges des Betätigungselementes, wobei die eine Freilaufeinrichtung zwischen zwei der drei Anschläge der Baueinheit angeordnet ist.

Eine solche Einstellvorrichtung ist aus der nicht zum vorveröffentlichten Stand der Technik gehörenden DE-OS 41 09 887 bekannt. Hierbei sind zwei gleichgerichtete Rastmechanismen als Freilauf benutzt, die in einem gemeinsamen, im wesentlichen zylindrischen Gehäuse untergebracht sind. Zwischen beiden Freiläufen ist ein eine Zugstange einschließender und als Gehäusewand ausgebildeter Doppelanschlag vorgesehen, an dem sich Klemmstücke beider Freiläufe abwechselnd auf gegenüberliegenden Seiten abstützen. Ein weiterer Anschlag begrenzt die zweite nach den Bedürfnissen des Bremssystems bestimmte Endlage der Klemmstücke des ersten Freilaufs und bildet eine Art Vorkammer im Gehäuse, die den Leerweg der Bremse bestimmt. Beide Freiläufe sind gleichgerichtet, d. h. sie blockieren in der gleichen Richtung, und erlauben eine Relativbewegung in der gleichen Richtung. Beim Betätigen der Bremse blockiert der zweite Freilauf mit einer Reihe von Zähnen mit dem Betätigungselement, während das Klemmstück des ersten Feilaufes über das Betätigungselement rutschen, sobald sie den Leerweg der Vorkammer durchfahren haben und an dem Doppelanschlag anliegen.

Beim Lösen der Bremse ist der kinematische Ablauf umgekehrt. Der erste Freilauf durchfährt mit seinen federnd angedrückten Klemmstück die Vorkammer, bis dieses an dem gegenüberliegenden Anschlag anliegt, spätestens dort mit dem Betätigungselement in Form der Zugstange verriegelt und ein weiteres verschieben des Betätigungselementes verhindern. Die weitere Bewegung des Bremshebels verursacht ein Rutschen des Klemmstückes des zweiten Freilaufes auf dem Betätigungselement. Hierdurch wird die wirksame Länge des Bremsgestänges oder des Bremszuges um das überflüssige Spiel bzw. die überflüssige Lose verkürzt. Das gewünschte Maß an Lose wird durch den Spielraum des ersten Freilaufs in der Vorkammer belassen. Vorzugsweise ist diese Lösung für Handbremsen an Kraftfahrzeugen vorgesehen.

Der bekannte Vorschlag hat zwar den Vorteil, daß er auch ein automatisches Nachstellen der Bremse bei deren Betätigung bewirkt, die automatische Nachstellung ist jedoch nicht ohne Gefahren. Beim Nachstellen erfolgt nämlich keine Kontrolle, ob das Maß der zulässigen Nachstellung bereits überschritten ist. Nachteilig ist auch, daß bei Überlastung der Bremse vom Handbremshebel her zu wenig Lose eingestellt werden kann und daß bei Versagen der Rückholfeder der Bremse auch das erforderliche Maß an Lose verlorengeht. Schließlich baut das zylindrische Gehäuse der Baueinheit zum Schnellverstellen unter Umständen zu groß, als daß es in jedem Kardantunnel eines Kraftfahrzeuges Platz finden könnte. Eine Nachstellvorrichtung von Bremsen für Eisenbahnwagen mit ähnlichem Wirkungsprinzip ist auch schon aus der DE-PS 67 1 006 bekannt.

Davon ausgehend liegt der Erfindung die Aufgabe zugrunde, eine Einstellvorrichtung für Bremsen zu schaffen, die ein unbeabsichtigtes Nachstellen der Bremse vermeidet und dennoch eine Schnellverstellung beim Einbau der Bremsanlage oder beim Service erlaubt. Zusätzlich soll eine möglichst geringe Höhe der Baueinheit zur Schnellverstellung erzielt werden , um den räumlichen Gegebenheiten im Bodenbereich eines Kraftfahrzeuges Rechnung zu tragen.

Die Lösung dieser Aufgabe ist im kennzeichnenden Teil des Anspruchs 1 wiedergegeben. Dadurch wird erreicht, daß die verstellung der wirksamen Länge des Bremsgestänges bzw. des Bremszuges beim Einbau in kürzester Zeit und denkbar einfach erfolgen kann, wohingegen eine unbeabsichtigte Verstellung der Bremse durch die Funktionstüchtigkeit des ersten Freilaufes während des bestimmungsgemäßen Betriebs der Handbremse unmöglich ist. Sowohl nach der Erstinstallation der Bremse als auch nach erfolgter Korrektur der Bremseinstellung im Rahmen des werkstattseitigen Kundendienstes wird das wenigstens eine Verriegelungselement des ersten Freilaufes wieder entfernt. Der bzw. die Riegel des ersten Freilaufes wird nur im Werkstatt-Montagebereich als Spezialwerkzeug gebraucht.

Nach einer ersten besonderen Ausführungsform der Erfindung ist es vorgesehen, daß das wenigstens eine Verriegelungselement und das Betätigungselement formschlüssig oder kraftschlüssig miteinander verbindbar sind. Aus Sicherheitsgründen wird der zweite, dauerhaft installierte Freilauf immer mit einer formschlüssigen Verbindung zwischen dem Betätigungselement und dem Bremshebel versehen sein. Aber auch der erste Freilauf weist vorzugsweise eine Mehrzahl von Widerhaken auf, die ein Rutschen des Freilaufs in der Verriegelungsrichtung vermeiden. Dabei können bspw. sägezahnartige Verrastungen sowohl an dem Betätigungselement als auch an dem Verriegelungselement vorgesehen, die ein Maximum an Sicherheit gegen unbeabsichtigtes Lösen bieten.

In einer Weiterbildung weist die eine oder aber bei Freilaufeinrichtungen jeweils zwei parallel ausgerichtete Verriegelungselemente auf, die auf gegenüberliegenden Seiten des Betätigungselementes anordnenbar sind. Dabei sollten sich die Verriegelungselemente in parallelen Richtungen erstrecken. Insbesondere für den zu demontierenden Freilauf bietet dieses Merkmal den Vorzug, daß beide Riegel mit einem Griff eingesteckt oder herausgenommen werden können. Letzteres läßt sich besonders günstig mit einer gemeinsamen Handhabe für beide Verriegelungselemente eines Paares realisieren, so daß sowohl die versehentliche Montage oder Demontage nur eines Verriegelungselementes ausgeschlossen ist.

Auch ist es nach der Erfindung möglich, daß die beiden Verriegelungselemente des zu demontierenden Freilaufes so beabstandet sind, daß sie aufgrund ihrer Verbindung durch die gemeinsame Handhabe im Klemmsitz auf das Betätigungselement aufgesteckt werden können und auf dem Betätigungselement gehalten sind. Der Handgriff ist als Klemmfeder ausgebildet. Das aufgesteckte Paar von Verriegelungselementen klemmt auf dem Betätigungselement.

Zur Verringerung der Bauhöhe der Baueinheit zur Verstellung der wirksamen Länge der Bremsbetätigung werden die paarweise angeordneten Verriegelungselemente der Freilaufeinrichtungen so ausgebildet, daß sie nur auf zwei Seiten des Betätigungselementes zu liegen kommen und dieses nicht umschließen. Zudem sind die Verriegelungselemente der einen oder beider Freilaufeinrichtungen in der gleichen, die Funktionsebene bildende Längsebene der Baueinheit zur Schnellverstellung wirksam bzw. angeordnet, so daß sich ein flaches Gehäuse dieser Baueinheit ergibt.

Ergänzend ist das Gehäuse der Baueinheit zur Schnellverstellung längsgeteilt, was eine unmittelbare Zugänglichkeit aller Verstellelemente nach Abnahme eines das Gehäuse abschließenden Deckels ermöglicht. Die Trennfuge der Gehäuseteile liegt parallel zur Funktionsebene.

Die Ausgestaltung der Erfindung, wonach die Anschläge das Betätigungselement auf mindestens zwei Seiten umgeben und es führen und wonach eine die Freilaufeinrichtung aufnehmende Vorkammer quer zur Funktionsebene zugänglich und in dieser Richtung mit dem wenigstens einen Verriegelungselement bestückbar ist bietet eine Möglichkeit, die Verriegelungselemente orthogonal zur Funktionsebene einzustecken und herauszunehmen, ohne daß dazu weitere Montagearbeiten erforderlich wären.

Die Nachstellfunktion der erfindungsgemäßen Vorrichtung bei Überlastung läßt sich auch dadurch verhindern, daß der bremshebelseitige Anschlag der einen Freilaufeinrichtung entfernbar und ggf. wieder anbringbar ist.

Weitere Ziele, Merkmale, Vorteile und Anwendungsmöglichkeiten der vorliegenden Erfindung ergeben sich aus der nachfolgenden Beschreibung eines Ausführungsbeispieles anhand der Zeichnungen.

Es zeigen:
- Figur 1: eine Draufsicht auf eine Bremsanlage mit der erfindungsgemäßen Einstellvorrichtung,
- Figur 2: eine Seitenansicht einer erfindungsgemäßen Einstellvorrichtung mit zwei Freilaufrichtungen,
- Figur 3: eine Draufsicht auf die Einstellvorrichtung gemäß Figur 2,
- Figur 4: eine Seitenansicht beider Verriegelungselemente der demontierbaren Freilaufeinrichtung gemäß Figur 2,
- Figur 5: eine Seitenansicht des Verriegelungslementes gemäß Figur 4,
- Figur 6: eine erste Einstellphase der Einstellvorrichtung,
- Figur 7: eine zweite Einstellphase der Einstellvorrichtung und
- Figur 8: eine dritte Einstellphase der Einstellvorrichtung.

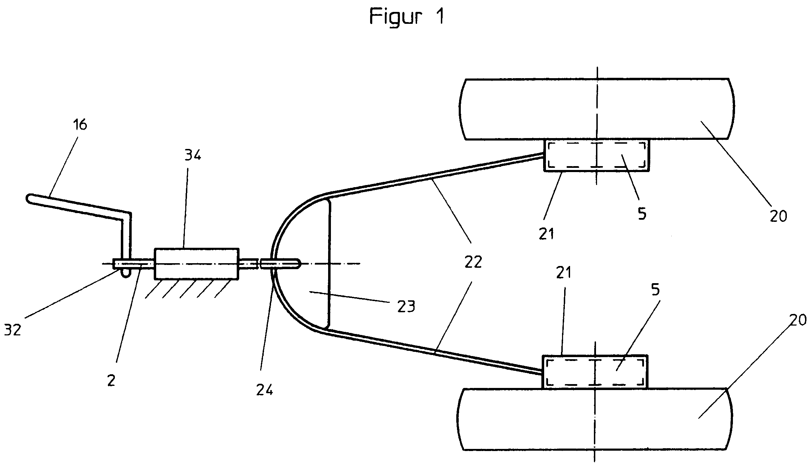

Figur 1 zeigt eine Bremsanlage mit an zwei Rädern 20 angeordneten Bremstrommeln 21 als Teil von zwei Bremsen 5, die durch einen Seilzug 22 betätigt werden. Der Seilzug 22 ist an einem Umlenkstück 23 geführt. An diesem Umlenkstück 23 greift ein Betätigungselement 24 in Form einer Zugstange an, die mit einem Ende in die Baueinheit 34 zur Verstellung der wirksamen Länge des Bremszuges 22 hineinragt. Am anderen Ende der Baueinheit 34 greift ein Bremshebel 16 an, mit dem die Bremse 5 im Fahrbetrieb bzw. beim Abstellen des Fahrzeuges betätigt wird. Der Bremshebel 16 und ein Schieber 2 sind insofern starr miteinander verbunden, als der Bremshebel 16 den Schieber 2 zwangsweise hin- und herbewegen kann. Beim Betätigen, d. h. Anziehen der Bremse 5, bewegt sich das Betätigungselement 24 in Richtung des Pfeiles A. Beim Lösen der Bremse 5 ziehen (nicht gezeigte) Federn in der Bremse 5 den Seilzug 22 und das Betätigungselement 24 in Richtung des Pfeiles B zurück.

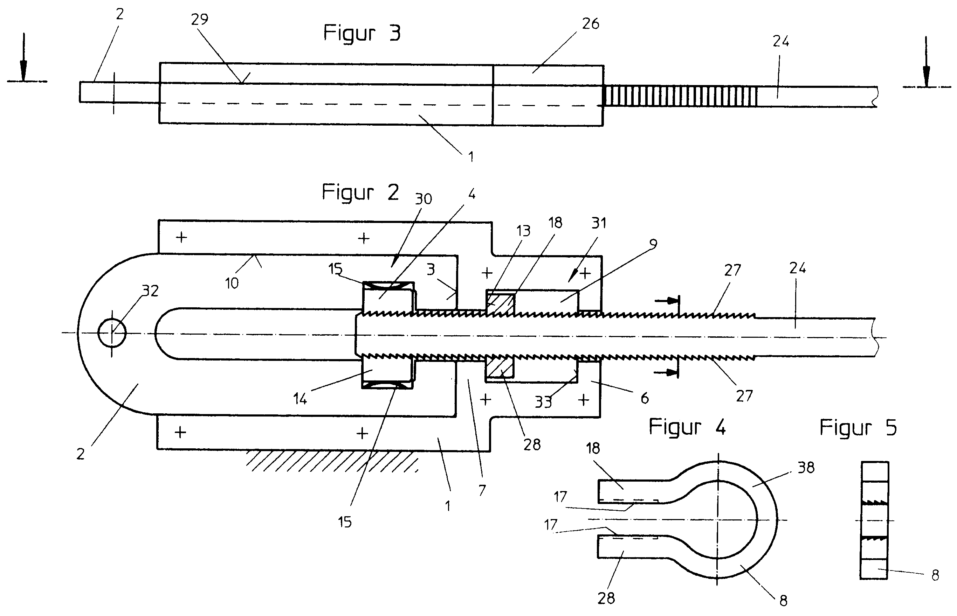

Figuren 2 und 3 zeigen die Baueinheit 34 zur Verstellung der wirksamen Länge des Bremszuges 22 mit einem Gehäuse 1, das mit einem Deckel 26 verschlossen wird. Das Gehäuse 1 ist am Chassis eines Kraftfahrzeuges befestigt. Deckel 26 und Gehäuse 1 bilden eine Trennfuge 29, die sich parallel zu den Pfeilen A und B gemäß Figur 1 erstreckt. Diese Trennfuge 29, welche der Zeichnungsebene gemäß Figur 2 entspricht, ist auch die Funktionsebene der Baueinheit 34 zur Verstellung der wirksamen Bremszuglänge. Alle Bewegungen zur Verstellung der wirksamen Länge des Bremszuges 22 finden in der Zeichenebene nach Figur 2 statt.

Im Gehäuse 1 ist das als bügelförmiger Schieber 2 ausgebildete Übertragungselement in einer Führung 10 aufgenommen. Das Betätigungselement 24 ist ebenfalls im Gehäuse 1 verschiebbar gelagert. Die Bremszuglänge ist somit durch die resultierende Länge des Seilzuges 22, des Betätigungselementes 24 und des Schiebers 2 bestimmt.

Im Gehäuse 1 sind zwei als Anschläge fungierende Trennwände 6, 7 vorgesehen, wobei die Tennwand 7 zwei Freilaufeinrichtungen 30, 31 trennt und als zweifacher Anschlag 3, 13 wirkt. Beide Trennwände 6 und 7 bilden eine Vorkammer 9, die dem ersten Freilauf 31 als Anschläge 13, 33 in Längsrichtung dienen. Dieser erste Feilauf 31 wird lediglich bei der Einstellung der wirksamen Bremszuglänge eingebaut. Der zweite Freilauf 30 hingegen verbindet den Schieber 2 und das Betätigungselement 24 formschlüssig während der gesamten Betriebsdauer des Fahrzeuges. Der Schieber 2 ist mit dem Handbremshebel 16 am Auge 32 gelenkig verbunden.

Bei abgenommenem Deckel 26 können alle Teile einzeln in das Gehäuse 1 eingesetzt werden. Die Baueinheit 34 ist aber auch ohne Deckel 26 grundsätzlich funktionsfähig. Der Deckel 26 kann zu Inspektionszwecken abgenommen werden, um bspw. die Funktion der Baueinheit 34 zur Bremszugeinstellung zu überprüfen oder eine Nachstellung vorzunehmen.

Das Betätigungselement 24 ist im Querschnitt rechteckig ausgebildet und trägt auf gegenüberliegenden Querschnittsseiten je eine sägezahnartige Verzahnung 27, in die die Verzahnungen 17 von Klemmstücken 4, 14 und Verriegelungselementen 18, 28 eingreifen. Die geneigten Zähne dieser Verzahnungen 17 weisen in Richtung des Pfeiles B gemäß Figur 1. Diese Ausrichtung der Zähne erlaubt ein Rutschen nach Art einer Ratsche der noch zu beschreibenden Klemmstücke 4, 14 und Verriegelungselmenten 18, 28 über das Betätigungselement 24 in Richtung des Pfeiles B und eine Verriegelung in Richtung des in Figur 1 angegebenen Pfeiles A.

Der erste Freilauf 31 besteht aus zwei parallelen Verriegelungselementen 18, 28, die durch einen ringförmigen Handgriff 38 miteinander verbunden sind. Der Handgriff 38 dient gleichzeitig als Feder, welche die beiden Verriegelungselemente 18, 28, die das Betätigungselement 24 im eingebauten Zustand kreuzen, im Klemmsitz auf dem Betätigungselement 24 festhalten. Die Verriegelungselemente 18, 28 bilden im Zusammenwirken mit ihrem Handgriff 38 eine Rastklaue 8, wie dies insbesondere in Figuren 4 und 5 dargestellt ist.

Der zweite Freilauf 30 weist zwei Klemmstücke 4, 14 auf, die ebenfalls in die Verzahnung 27 des Betätigungselementes 24 eingreifen und hierdurch den Schieber 2 mit dem Betätigungselement 24 verbindet. Hierzu sind die freien Enden der Schenkel des U-förmigen Schiebers 2 mit je einer durchgehenden, seitlich offenen Nut versehen, in denen die Klemmstücke 4, 14 von Blattfederelementen 15 gegen die Verzahnungen 27 des Betätigungselementes 24 gedrückt werden und dort verrasten.

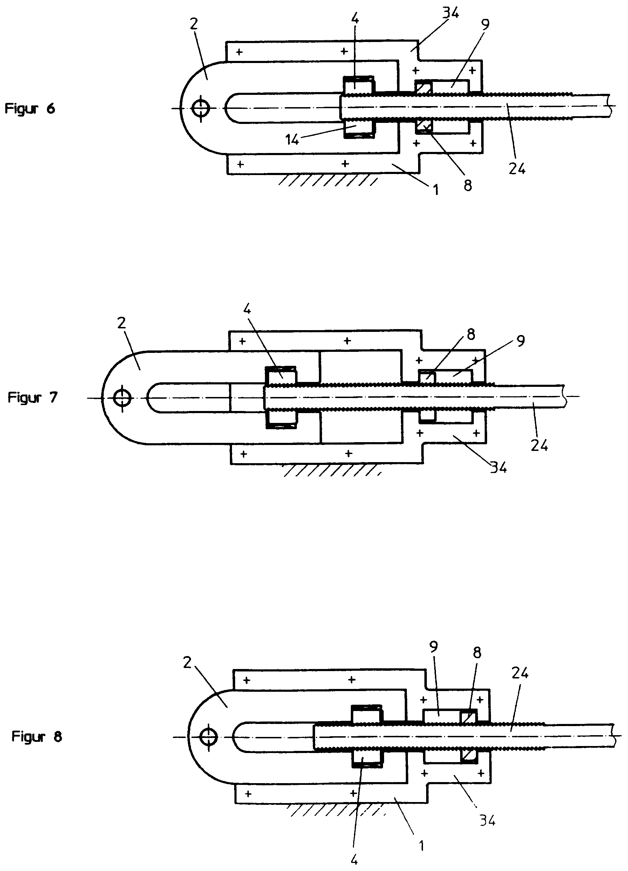

Die mit Hilfe der Vorrichtung durchzuführende Schnelleinstellung eines Handbremsseiles ist in den einzelnen Schritten in Figuren 6, 7 und 8 dargestellt. Dabei zeigt Figur 6 den Ausgangszustand der Vorrichtung zur Schnelleinstellung von Kraftfahrzeugbremsseilen, entsprechend der Anlieferung an das Automobil-Herstellungswerk zum Einbau am Band.

Um eine Ersteinstellung des Bremsseiles vorzunehmen, wird der Schieber 2 mittels des Handhebels 16 in seine Bremsstelllung gezogen, bis eine vorgegebene Sollkraft erreicht ist. Beim daraufhin vorgenommenen Lösen des Handbremshebels 16 wandert das Betätigungselement 24 mit dem Schieber 2 nur um die Wegstrecke zurück, welche durch die Länge der Vorkammer 9 abzüglich der Stärke der Verriegelungselemente 18, 28 vorgegeben ist. Die Rastklaue 8 blockiert die Zugstange 24 beim Auftreffen auf die äußere Gehäusewand 6. Beim weiteren Zurückführen des Bremshebels 16 drückt der Schieber 2 die Klemmstücke 4, 14 der Freilaufeinrichtung 30 gegen die Kraft der Federelemente 15 aus der Verrastung nach außen heraus und über das Betätigungselement 24, bis der Schieber 2 die als Anschlag dienende Gehäusewand 7 zwischen den beiden Freiläufen 30, 31 erreicht hat. Jetzt wird die Rastklaue 8 herausgezogen und die Bremse 5 ist eingestellt.

Selbstverständlich kann auch eine Nachstellung des Bremsseiles 22 in einer Kfz-Werkstatt durch Einsetzen und späteres Herausnehmen der Rastklaue 8 entsprechend der in Figuren 6, 7 und 8 dargestellten Vorgehensweise vorgenommen werden.

Auch kann die Vorrichtung relativ schmal ausgeführt sein, wie dies insbesondere aus Figur 3 ersichtlich ist. Hierzu sind alle für die Betätigung der Bremse 5 innerhalb der Baueinheit 34 vorgesehenen beweglichen Teile ausschließlich in der durch die gemäß Figur 2 bestimmte Funktionsebene beweglich. Die Nachstellfunktion der Einstellvorrichtung bei Überlastung läßt sich auch dadurch verhindern, daß der bremshebelseitige Anschlag 33 der ersten Freilaufeinrichtung 31 entfernbar ist, bspw. nach der Montage am Band weggebrochen oder mit einer Sollbruchstelle versehen ist, welche bei Überlastung den Anschlag 33 wegbrechen läßt.

### Bezugszeichenliste

- 1 -: Gehäuse
- 2 -: Schieber
- 3 -: Doppelanschlag
- 4 -: Klemmstück
- 5 -: Bremse
- 6 -: Trennwand, Gehäusewand
- 7 -: Trennwand, Gehäusewand
- 8 -: Rastklaue
- 9 -: Vorkammer
- 10 -: Führung
- 13 -: Doppelanschlag
- 14 -: Klemmstück
- 15 -: Blattfeder
- 16 -: Bremshebel
- 17 -: Verzahnung
- 18 -: Verriegelungselement
- 20 -: Rad
- 21 -: Bremstrommel
- 22 -: Seilzug
- 23 -: Umlenkstück
- 24 -: Betätigungselement, Zugstange
- 26 -: Deckel
- 27 -: Verzahnung
- 28 -: Verriegelungselement
- 29 -: Trennfuge
- 30 -: Freilaufeinrichtung
- 31 -: Freilaufeinrichtung
- 32 -: Auge
- 33 -: Anschlag
- 34 -: Baueinheit
- 38 -: Handgriff

## Patentansprüche

1. Einstellvorrichtung für Bremsen (5), insbesondere für Hand- oder Feststellbremsen von Kraftfahrzeugen, mit einem Bremshebel (16), einem Betätigungselement (24) für die Bremse (5), einer Baueinheit (34) zur Verstellung der wirksamen Länge des Bremszuges (22, 2) mit zwei Freilaufeinrichtungen (30, 31), wobei mindestens eine Freilaufeinrichtung (30) mittels einer formschlüssigen Verbindung die relative Position von Bremshebel (16) und Betätigungselement (24) unter der Bremsspannung verriegelt, sowie mit mindestens drei Anschlägen (3, 13, 33) zur Einstellung des Weges des Betätigungselementes (24), wobei die eine Freilaufeinrichtung (31) zwischen zwei (33, 13) der drei Anschläge (3, 13, 33) der Baueinheit (34) angeordnet ist, dadurch gekennzeichnet, daß die zwischen den zwei Anschlägen (33, 13) angeordnete Freilaufeinrichtung (31) wenigstens ein einsteckbares und herausnehmbares Verriegelungselement (18) aufweist.

2. Einstellvorrichtung nach Anspruch 1, dadurch gekennzeichnet, daß das wenigstens eine Verriegelungselement (18) und das Betätigungselement (24) formschlüssig oder kraftschlüssig miteinander verbindbar sind.

3. Einstellvorrichtung nach Anspruch 1 oder 2, dadurch gekennzeichnet, daß die zwischen den zwei Anschlägen (13, 33) angeordnete Freilaufeinrichtung (31) zwei parallel ausgerichtete Verriegelungselement (18, 28) aufweist, die zur Einstellung des Bremszuges (22, 2) auf gegenüberliegenden Seiten des Betätigungselementes (24) zu liegen kommen.

4. Einstellvorrichtung nach einem der Ansprüche 1 bis 3, dadurch gekennzeichnet, daß die beiden Verriegelungselemente (18, 28) durch einen gemeinsamen Handgriff (28) verbunden sind.

5. Einstellvorrichtung nach einem der Ansprüche 1 bis 4, dadurch gekennzeichnet, daß die Verriegelungselemente (18, 28) gabelförmig ausgebildet sind und in Montagestellung das Betätigungselement (24) klemmen.

6. Einstellvorrichtung nach einem der Ansprüche 1 bis 5, dadurch gekennzeichnet, daß alle Verriegelungselemente (18, 28) der einen Freilaufeinrichtung (31) und das bzw. die Klemmstücke (4, 14) der gehäusefesten Freilaufeinrichtung (30) in der gleichen Längsebene des Betätigungselements (24) angeordnet sind.

7. Einstellvorrichtung nach einem der Ansprüche 1 bis 6, dadurch gekennzeichnet, daß das Gehäuse (1) der Betätigungseinheit (34) längsgeteilt ist.

8. Einstellvorrichtung nach einem oder mehreren der vorangegangenen Ansprüche, dadurch gekennzeichnet, daß die Anschläge (3, 13, 33) das Betätigungselement (24) auf mindestens zwei Seiten umgeben und es führen und daß eine die Freilaufeinrichtung (30) aufnehmende Vorkammer (9) quer zur Funktionsebene zugänglich und in dieser Richtung mit dem wenigstens ein Verriegelungselement (18) bestückbar ist.

9. Einstellvorrichtung nach einem der Ansprüche 1 bis 8, dadurch gekennzeichnet, daß der bremshebelseitige Anschlag (33) der einen Freilaufeinrichtung (31) entfernbar und ggf. wiederanbringbar ist.

## Claims

1. Adjusting device for brakes (5), in particular for manual or parking brakes of motor vehicles, with a brake lever (16), an actuating element (24) for the brake (5), a constructional unit (34) for resetting the effective length of the brake pull (22, 2) with two freewheel equipments (30, 31), wherein at least one freewheel equipment (30) latches the relative position of the brake lever (16) and the actuating element (24) under the brake tension by means of a shape-locking connection, as well as with at least three abutments (3, 13, 33) for the setting of the travel of the actuating element (24), wherein the one freewheel equipment (31) is arranged between two (33, 13) of the three abutments (3, 13, 33) of the construction unit (34), characterised thereby, that the freewheel equipment (31) arranged between the two abutments (33, 13) displays at least one latching element (18) capable of being plugged in and withdrawn.

2. Adjusting device according to claim 1, characterised thereby, that the at least one latching element (18) and the actuating element (24) are connectable one shape-lockingly or force-lockingly with the other.

3. Adjusting device according to claim 1 or 2, characterised thereby, that the freewheel equipment (31) arranged between the two abutments (31, 13) displays two parallelly oriented latching elements (18, 28), which for the setting of the brake pull (21, 2) come to lie on opposite sides of the actuating element (24).

4. Adjusting device according to one of the claims 1 to 3, characterised thereby, that both the latching elements (18, 28) are connected by a common handle (28).

5. Adjusting device according to one of the claims 1 to 4, characterised thereby, that the latching elements (18, 28) are constructed in forked shape and in the assembled setting clamp the actuating element (24).

6. Adjusting device according to one of the claims 1 to 5, characterised thereby, that all latching elements (18, 28) of the one freewheel equipment (31) and the or each clamping member (4, 14) of the freewheel equipment (30) are arranged in the same longitudinal plane as the actuating element (24).

7. Adjusting device according to one of the claims 1 to 6, characterised thereby, that the housing (1) of the actuating unit (34) is divided longitudinally.

8. Adjusting device according to one or more of the preceding claims, characterised thereby, that the abutments (3, 13, 33) surround the actuating element (24) on at least two sides and guide it and that an antechamber (9) receiving the freewheel equipment (30) is accessible transversely to the functional plane and equippable in this direction with the at least one latching element (18).

9. Adjusting device according to one of the claims 1 to 8, characterised thereby, that the abutment (33) at the brake lever end of the one freewheel equipment (31) is removable and in a given case remountable.

## Revendications

1. Dispositif de réglage pour freins (5), en particulier pour freins à main et freins de blocage de véhicules automobiles, comportant un levier de frein (16), un élément de commande (24) pour le frein (5), une unité structurelle (34) pour régler la longueur efficace du tirant de frein (22, 2) avec deux dispositifs à roue libre (30, 31), au moins un dispositif à roue libre (30) verrouillant, à l'aide d'une liaison mécanique, la position relative du levier de frein (16) et de l'élément de commande (24) sous la tension du frein, ainsi qu'au moins trois butées (3, 13, 33) pour régler la course de l'élément de commande (24), le premier dispositif à roue libre (31) étant agencé entre deux (33, 13) des trois butées (3, 13, 33) de l'unité structurelle (34), caractérisé en ce que le dispositif à roue libre (31) agencé entre les deux butées (33, 13) présente au moins un élément de verrouillage (18) enfichable et enlevable.

2. Dispositif de réglage selon la revendication 1, caractérisé en ce que l'élément de verrouillage (18) au moins et l'élément de commande (24) peuvent être reliés l'un à l'autre par voie mécanique ou à force.

3. Dispositif de réglage selon la revendication 1 ou 2, caractérisé en ce que le dispositif à roue libre (31) agencé entre les deux butées (13, 33) présente deux éléments de verrouillage (18, 28) alignés en parallèle, qui viennent s'appuyer sur des côtés opposés de l'élément de commande (24) pour régler le triant de frein (22, 2) du frein.

4. Dispositif de réglage selon l'une quelconque des revendications 1 à 3, caractérisé en ce que les deux éléments de verrouillage (18, 28) sont reliés par une manette commune (28).

5. Dispositif de réglage selon l'une quelconque des revendications 1 à 4, caractérisé en ce que les éléments de verrouillage (18, 28) se présentent en forme d'étrier et bloquent l'élément de commande (24) en position de montage.

6. Dispositif de réglage selon l'une quelconque des revendications 1 à 5, caractérisé en ce que tous les éléments de verrouillage (18, 28) du premier dispositif à roue libre (31) et la ou les pièces de serrage (4, 14) du dispositif à roue libre (30) fixé au boîtier sont agencés dans le même plan longitudinal de l'élément de commande (24).

7. Dispositif de réglage selon l'une quelconque des revendications 1 à 6, caractérisé en ce que le boîtier (1) de l'unité de commande (34) est divisé longitudinalement.

8. Dispositif de réglage selon une ou plusieurs des revendications précédentes, caractérisé en ce que les butées (3, 13, 33) entourent l'élément de commande (24) sur au moins deux côtés et le guident, et en ce qu'une pré-chambre (9) recevant le dispositif à roue libre (30) est accessible transversalement au plan fonctionnel et peut recevoir, dans cette direction, l'élément de verrouillage (18) au moins.

9. Dispositif de réglage selon l'une quelconque des revendications 1 à 8, caractérisé en ce que la butée (33), côté levier de frein, peut être retirée du premier dispositif à roue libre (31) et éventuellement remise en place.
